# EUROPEAN PATENT APPLICATION

(11) **EP 1 566 399 A1**
(43) Date of publication of application: **24.08.2005**
(21) Application number: 03773444.9
(22) Date of filing: 25.11.2003
(51) Int. Cl.: C08G 69/30, C08G 69/44

(54) **METHOD OF PREPARING DENDRONS AND DENDRIMERS WITH HETEROCYCLIC SUBSTRUCTURES OF IMINO-ETHERS AND DERIVATIVES USING NON-STANDARD MEANS AND MICROWAVES**

(30) Priority: 26.11.2002 CU 27902
(71) Applicant: Centro Nacional De Investigaciones Cientificas (CNIC), Ciudad de la Habana 12100 (CU); Marrero Terrero, Alma Leilani, Ciudad Habana 12 100 (CU)
(72) Inventor: CONTRERAS ALARC N, Orestes, Rolando, Marianao, 11 400 Habana (CU)
(74) Representative: Carpintero Lopez, Francisco
(86) International application number: PCT/CU2003/000014
(87) International publication number: WO 2004/048442

(57) **Abstract**

Dendrons and dendrimers are prepared by synthetic procedures under microwaves starting from heterocyclic substructures of C2 and C4 substituted iminoethers or from their boronic, sulfonic and phosphoric derivatives, or from their N-substituted derivatives, cyclic and acyclics, their products of hydrolysis or the transformations of them in other pentagonal nitrogenated heterocycles with incorporation in some cases, of structural units of chromogenic or fluorogenic glucuronides in their cavities or in the dendrimeric surface, in dependence of the functionality of the outlying groups.

Starting from different reactions of the iminoetheres with carboxylic acids, anhydrides, esters, bases, aldehydes, alkyl halides, amines, isocyanates, aromatic thiols, by pyrolysis or hydrolysis, in sequences of selected reactions, alternated and iteratives, with the use of procedures and non classic methods of synthesis under microwaves at power between 30 and 300 Watt at 2450 MHz, to achieve the formation of basic substructures for the construction of dendrons, arms or ramifications of dendritic structures of different generations, from G0 to G4, by a convergent strategy, in presence or absence of solvents and/or polymeric or mineral solid supports.

## Description

### Field of the Invention

The present invention is related with the fields of macromolecular organic chemistry, supramolecular chemistry and organic synthesis of substructures that form part of the skeleton of dendritic structures and dendrimer construction.

### Background of the Invention

Dendrimers represent a new class of three-dimensional macromolecules of arborescent construction, with well-defined geometry and chemical structure. They are molecules, perfectly structured, evenly ramified, with high ordering degree whose ramifications, irradiate starting from a core or central heart toward the periphery with functional groups that can be in a very high superficial density. These macromolecules have the ability to contain in their cavities internal chemical units, selected in predetermined locations of their structure, which provide specific additional properties as hosts of other chemical substances. The ramifications or extending arms are synthesized starting from identical construction blocks, by an iterative synthetic strategy.

Dendrimers are synthesized step by step, in a sequence of repetitive reactions that guarantee complete sheaths for each generation, highlighting in them their monodispersity in comparison with their polydisperse analogues of polymeric nature.

The synthetic procedures developed for the preparation of dendrimers allow an almost complete control of the parameters of molecular design such as: dimension, form, inner and superficial chemistry, flexibility and topology.

The term dendrimers, from the Greek "dendron" which means tree and "mere" which means parts, has been used to represent a wide variety of new macromolecules that are also identified as "arborols", cascade molecules, cauliflower-like molecules, "starburst", hyperbranched molecules or stark-like molecules, which differ from its similar linear analogues (polymers), not only in the form of their construction form, but also in particular properties such as: viscosity, monodispersity ordering in the construction, globular disposition, with analogy in dimension or size with proteins.

Until present there are not less than 1020 patents, in which the design and construction of these macromolecules and their parts, have applications not only in pharmaceutical formulations but also in nanotechnologic devices.

The state of the art in dendrimer synthesis, can be described according to fundamental strategies:
Divergent strategy.
Convergent strategy.
Self-assembling strategy.

The divergent method and the first dendrimer synthesis have been recognized that were described for the first time by Prof. Dr. F. Vögtle and co-workers in 1978, for the synthesis of poly(propylene-imine). This method is also well known as "divergent starburst strategy." The employment of a number of iterative reactions determines each subsequent reaction and characterizes a new generation with an exponential increment of the number of functional groups in the periphery. The first dendrimer synthesis carried out by Vögtle who started from acrylonitrile and an aliphatic diamine, meant a new possibility of obtaining macromolecules with a high interest for the chemists.

Later on, in 1986, Prof. Dr. Donald Tomalia and co-workers described the synthesis of poly(amidoamine)-type dendrimer by divergent growth, where alternated reactions between methyl acrylate and ethylenediamine are done iteratively. Using ammonia or a diamine as dendritic core, the terminal esters are transformed into amides by addition of an excess of ethylenediamine.

Both methods of Vögtle and Tomalia, produced dendrimers susceptible of defects in their construction due to the presence of impurities that can be occluded, which are occasionally the cause of the low yields, as well as the destruction of the symmetry and the formation of by-products (as lactames) among the superficial groups. This bears the necessity of an exhaustive purification of the reaction products and the employment of expensive techniques such as column chromatography, dialysis or other methods, for the isolation and purification of the products.

Among the synthetic limitations of the procedure of Dr. Tomalia, is also the use of a superexcess of diamine which contaminates the reactions, and it is necessary to distill them or to eliminate them during the procedure of isolation and purification of the final product, because excess diamines can give low generations dendrimers mixed with the dendrimer of interest, mainly when new iterative reactions are carried out for other sequences in the creation of new generations. This also hinders the methods of analysis of these compounds, which are thoroughly checked for purity by size exclusion chromatography before structural characterization.

In 1990, a new methodology of convergent growth of dendrimers was described by Prof. Dr J. Fréchet, which favors the construction of a wider diversity of functional groups in the surface of dendrimers, and it is designed for the construction of macromolecules from the periphery toward the core. This last strategy is more advantageous than the divergent one, by the form and diversity that it is achieved in the construction of ramifications or arms and by the variety of possibilities of union to cores of different nature.

The self-assembling strategy was described by Zimmerman and co-workers in 1996 and it unifies the synthesis of new organic compounds that are linked among themselves or with other compounds, to form complexes, aggregates or crystalline solids, by means of very diverse chemical interactions. Those non-covalent assemblings, well known in supramolecular chemistry, can be created in a controlled way to be used in new chemical sensors, devices for the transport or storage of other molecules, as well as for a wide variety of biomedical applications and in material science.

Science 1997, the description of dendrimers synthesis in solid phase and the improvement of the synthetic procedures has gone in ascent, which has allowed partially to improve the procedures of obtaining dendrimeric molecules with higher yields and purity.

In 1998, Newkome showed the advantages of the use of the direct synthesis of dendrimers in solid phase using polystyrene resins. The advantages of this method compared to previously described methods have been recognized by the selectivity in the construction of the molecules and the improved purity and yields obtained.

### Summary of the Invention

The problem solved in the present invention does not have known similar solutions, because it constitutes a technical application for the employment by the first time of microwaves in the procedure for the synthesis of parts of dendritic structures, dendrons and dendrimers, starting from molecules with heterocyclic or derived from cyclic iminoether substructures, which are built, isolated and purified as subunits, by successive reactions in absence of solvents or not, by means of sequential and repetitive reactions, such as: O-acylation, N- or O-alkylation, cycloaddition, esterification and condensation, with the elimination of the traditionally long-lasting isolation and purification processes of the subunits that constitute them.

Until now, the construction of the macromolecular architecture by means of the known traditional methods of protection or deprotection of functional groups, in our case is not necessary or they are substituted by steps that do not include solvents in the syntheses.

The reactions under microwaves of cyclic iminoethers with carboxylic acids, anhydrides, esters, bases, aldehydes, alkyl halides, amines, isocyanates, aromatic thiols, by pyrolysis or hydrolysis of the heterocycles, reactions with aminoalcohols or diaminoalcohols, in alternated and iterative sequences, for the formation of the basic substructures, is designed by procedures under microwaves in absence of solvents or not, on mineral or polymeric solid supports.

The convergent strategy of construction for the formation of the subunits under microwaves, using natural mineral solid supports or doped with salts and/or complexes of alkaline or transitions metals, as well as the employment of polymeric supports commercially available for the bonding or protection of functional groups, alcohols or amines, which are used in diverse forms of chemical transformation in steps of iterative condensation .

This invention is concerned with dendrimeric subunits, dendrons and dendrimers obtained step by steps, under microwaves between 30 and 300 Watt at 2450 MHz (focused microwave reactors), at atmospheric pressure or under inert atmosphere (nitrogen or argon) in absence or not of solvents, in open vessels or in closed vessels under pressure in a number of repetitive steps according to the structure, parts and reactivity of the functional groups present.

There are solved some technical problems as the economy of reagents, selectivity, low energy involved in the processes to avoid degradation of final products and reagents, decrease of the reaction times and isolation and purification easiness of the products of interest for the construction of macromolecules and their parts step by step .

The invention is better illustrated with a realization example where the direct derivatization of the functional groups under microwaves of a tricarboxylic acid by reaction with a 1,2-diamine (such as diethylenetriamine), gives the polyamidoamine at the three centers of interest, without necessity of blocking the second ending aminofunctional group of the diamine. The use of diaminoalcohols can give esterified amides, which constitutes an advantage for the formation of more complex ramifications.

The reaction of the triamine with the core (1,3,5-benzenetricarboxylic acid), leads to three reactivity sites because it has three ending primary amino groups which can become new reactive centers later on in front of numerous diacids or triacids and therefore can leads to new ramifications, for the creation of the subsequent generations.

In the present invention the examples of dendritic structures are conceived in such a way that from the center, of variable polyfunctionality (from 2 to 4), emanate the arms that have also been built in an independent step under microwaves.

The behavior under microwaves of the isolated and pure products at reaction conditions between 1 minute to 2 hours, constitutes an advantage over the traditionally long reaction times for other systems of dendrimer construction by conventional methods and in the construction of ramifications.

The construction or final assembling of the constituent parts of the structure of dendrimers of higher generations can be related or not to the procedure of using microwaves, in dependence of the reactivity of the functional terminal or surface groups and of the capacity to maintain electrostatic interactions or formation of covalent bonds with new reagents.

In dependence of the use or not of non-polar solvents for the syntheses under microwaves, specific selectivities and reactivity are achieved conditioned by the presence of the primary or secondary amino groups in the 1,2-diamine used (diethylenetriamine for example).

In such cases the procedure under microwaves could be modified in concentrations, time and selected power, as well as the use or not of non polar solvents in the syntheses, for example: in dependence of the selected reactivity sites (if they are primary or secondary amino groups, the reactivity is different for the primary amino in relation to the secondary amino group).

The recording of thermal profiles under microwaves is used to adjust the reaction conditions, temperature, pressure, concentration and power for the work of iterative synthesis and for the knowledge of the behavior of the products or synthesized blocks (ramifications, dendrons and dendrimers) under microwaves. The knowledge of the properties of the materials under microwaves, by monitoring, and analyzing their behavior, avoids the possibility to extend in time and temperature the reactions of interest, being eliminated the possible degradation of the products and reagents by the variation of the gradients of temperature and by the control of those parameters.

It has been used a traditional monomode microwave reactor Maxidigest 350 MX from Prolabo without modifications, with programming of power and irradiation times so that the reaction conditions are adjusted by means of different working ramps between 30 and 300 Watt where the energy contribution and their effect is analyzed at the same time that the building blocks are obtained.

Under this procedure of using microwaves for the construction of subunits of dendrimeric type, it is possible to carry out hydrolysis reactions of hydrolysis of cyclic iminoethers in presence of acidic mineral solids supports (mineral clays, montmorillonites, and silica gel) eliminating all employment of mineral acids, typical of the conventional procedures for the same objectives.

There are also included in the present invention, heating steps in water for hydrolysis and rearranging of certain cyclic iminoethers, for obtaining, for example, aminoesters starting from the hydrochlorides of the synthesized iminoethers.

The opening of the iminoether ring for the preparation of the ramification dendritic nodes, in presence of salts such as potassium acetate on acidic mineral solid supports, allows the elimination of the use of mineral acids and/or organic acids such as acetic acid, reducing with this procedure the possibility of environmental pollution.

The treatment of the cyclic iminoethers with anhydrides of fatty acids leads to amidoesters (under microwaves and in absence of solvents) at the same form that they are obtained by classic methods of heating, but with smaller energy consumptions.

In a same way, the formation of various "mer" structures by the action of microwaves on iminoethers with polycarboxylic acids leads to products with alternate ester and amide functionality which serve as arms for later bonding in the formation of dendritic structures at temperatures above 200 C and power between 30 and 300 Watt with times from 1 to 30 minutes, which avoids the degradation or uncontrolled polymerization.

The use of aldehydes in the synthesis of the dendritic substructures that are object of the present invention is limited to those aldehydes with higher melting or boiling points, which boils or melts without decomposition.

The preparation of quaternary compounds starting from cyclic iminoethers with alkyl halides under microwaves is limited to those examples where the temperatures reached in the reactions do not exceed the limits of degradation of the products.

Reactions in which certain thermal rearrangements occur in classic chemistry, take place by the action of microwaves in shorter times and they are also object of the present invention, recording and monitoring the conditions under microwaves and their thermal behavior.

Cyclic iminoethers that base their polymerization on the hydroxymethyl substituents at position 4 of the heterocycle are also controlled under microwaves, for the formation of dendrimeric arms or ramifications.

An example of a general procedure for the synthesis of all parts can be summarized as follows:
Synthesis of the core initiator under microwaves in absence of solvents or not, by condensation reactions, consistent in the use of polyalcohols, polyamines, mono or or diaminopolyols reacting with di, tri, and tetra carboxylic acids under conditions of power between 30 and 300 Watt and times of reaction from less than one minute to one hour maximum, using a molar ratio 1:3 of carboxylic acids with regard to diamine or vice versa for the case of triamine.
Isolation and purification steps for the elimination of impurities by simple filtration of the obtained product dissolved in a polar or non-polar solvent, or their mixtures (such as methanol: dichloromethane 1: 9) in a porous glass filter with a mineral solid support under vacuum.
Synthesis of extension chains or dendritic ramifications under microwaves, where the ramified structures are built, for their later bonding or assembling to the central core, taking place by successive condensation reactions.
Synthesis in the presence of protective groups in the terminal functions or periphery for which the procedure is not limited to the employment of microwaves.

The stages that the present invention refers to for the construction of dendrimeric structures, include the use of reagents that possess the following substituents:
Oxazoline derivatives of aldaric, aldonic and uronic acids, their esters or monosaccharide acetals leads to their corresponding aromatic and aliphatic derivatives present as superficial groups or being part of ramifications.
Fatty acids and derivatives of butyric, palmitic, estearic, palmitoleic, oleic, linoleic, linolenic, arachydonic, and biliaric acids derived from colic, desoxycolic and chenodesoxycolic acids.
Alkyl groups like n-propyl, iso-propyl, n-butyl, iso-butyl, sec-butyl, ter-butyl, pentyl, iso-amyl, and neopentyl, as well as ethylene, vinyl, ethylidene, allyl, 1-propenyl, cyclohexyl, and analogous are incorporated as connectors or being part of the dendrimeric ramification.
Alkyl, aryl and aroyl groups, derivatives of naphthalene, anthracene, phenanthrene, and naphtyl, with electroaceptor and/or electrodonor groups as substituents of cyclic iminoethers in position 2 of the ring and starting from which their superficial location is achieved in dendrimers.

Other acids as substituted cyclohexane carboxylic or substituted cyclohexane acetic, as well as 2-pyridinecarboxylic or substituted 2-indol acetic acid derivatives, are included for their transformation under microwaves by their participation as superficial groups.

Diacids used as connectives in synthesis steps under microwaves, used without previous protection of one of the carboxylic groups or properly protected at one of the acid functions by cyclic iminoether-like blocking groups which are put to react in such a way that the reactions for the bonding by condensation with amino groups (for example in aminopolyols or diamines) are favorable for deprotection under microwaves for later condensation or subsequent reaction, in such a way of being able to carry out the new construction for the next generation also under microwaves.

The free end of carboxylate nature in the case of polycarboxylic acids, which are considered superficial groups, is protected according to a convergent methodology as iminoethers, and they can be hydrolyzed later to give amidopolyol in order to obtain superficial OH polyfunctionality at the outlying groups.

Diacids like phtalic, isophtalic and therephtalic, tartaric, fumaric, azelaic, sebacic, adipic, pimelic, glutaric, succinic and malonic are used with aminopolyols under microwaves for the stage of preparation of the bondings or for the preparation of dendrons when the aminopolyol is tris-hydroxymethyl amino methane, 2-methyl-2-amino-1,3-propanediol, 2-amino-2-methyl-1-propanol, 2-amino-1-propanol or the 2-phenyl-2-amino-1,3-propanediol.

1,2-diamines used for the extension of the ramifications are basically diethylenetriamine and the N-(2-hydroxyethyl) ethylenediamine, ethylenediamine and JandaJel-NH2 resin from Aldrich, aminomethylated (polystyrene-co-divinylbenzene) from 70 to 400 mesh, and p-toluenesulfonic acid, used in a new procedure for the reactions of terminal functional groups as alcohols and amines which is carried out with microwave procedures.

The use of indol resins of the type 3-formyl-1-indolacetic or PL Wang resin used for their bonding to hydroxymethyl groups from hydroxyamides or iminoethers with free hydroxymethyl group in C-4 position of the heterocycle are carried out under microwaves as an example of the assembling stage to polymeric resins.

PL-EDA and PL-DETA resins are used for the bonding to the parts of the dendritic structure under microwaves and they are object of the present invention in the sense of the use of polymeric solids supports under microwaves for the procedure.

Other steps of the reactions on polymeric solid supports also include COOH functionalized bonding resins (carboxypolystyrene, carboxyethylpolystyrene, AM-COOH polystyrene and TO-COOH polystyrene, where the functionality or the number of terminal functions determines the destination of the subsequent application of the synthesized material and starting from which it is possible to achieve the formation of new materials.

The work in solution with the resins or in solid phase under microwaves depends on the type of functional group bonded to the support, the protective groups and the non-polar selected solvents transparent to microwaves. These reactions are previously prepared at normal temperature and pressure and the use of an energy source as microwaves depends on the reaction type (electrophylic or nucleophylic) and on the characteristics of the resistance of the polymeric material by the action of microwaves.

There are also object of the present invention O-glucuronides of aryl type (as paracetamol glucuronide) or MUG (4-methylumbellypheryl-β-D-glucuronide) or others derived from glucuronic acid such as 4-nitro-phenyl-β-D-glucuronide or coumarines bonded to alkyl groups (including any steroidal derivatives) or acyl glucuronides where the incorporated acyl group from a carboxylic acid derivative, such as valproic, or a fatty acid, as an alcohol, saturated or non saturated, up to more than 30 total carbon atoms at the surface or in branches that come from the dendrimer core, or being part of the cavities of its own dendrimeric structure, in such a way that the step of incorporating them to dendrimer is not limited to the activation by microwaves as a process within the procedure of dendrons and dendrimers formation.

## Claims

1. Procedure for the preparation of dendrons and dendrimers with heterocyclic substructures and their derivatives, **characterized by** being synthesized by non-classic routes and under microwaves.

2. Procedure for the preparation of substructures, according to previous claim, **characterized by** the employment of sequential and iterative polycondensation, cyclization, esterification and amidation reactions in dependence of the core, dendrons, ramifications and dendrimers, in operational ranges from 30 from 300 Watt in focused microwaves reactors with Pyrex vessels, open or not to the atmosphere, in presence or absence of a polar or non polar solvent.
